# EUROPÄISCHE PATENTANMELDUNG

(11) **EP 3 955 509 A1**
(43) Veröffentlichungstag der Anmeldung: **16.02.2022**
(21) Anmeldenummer: 20191222.7
(22) Anmeldetag: 14.08.2020
(51) Int. Cl.: H04L 9/08, H04L 9/32, G06F 7/58

(54) **BEREITSTELLUNG VON QUANTENSCHLÜSSELN IN EINEM NETZWERK**

(71) Anmelder: Deutsche Telekom AG, 53113 Bonn (DE)
(72) Erfinder: BRAUN, Ralf-Peter, 12305 Berlin (DE); GEITZ, Marc, 58089 Hagen (DE)
(74) Vertreter: Brandt & Nern Patentanwälte

(57) **Zusammenfassung**

Die Erfindung betrifft eine Lösung zur Bereitstellung von quantensicheren kryptographischen Schlüsseln in einem Netzwerk, gemäß welchem ein erster dafür ausgebildeter Netzwerkknoten (1) Quantenschlüssel erzeugt und diese Quantenschlüssel als Nutzschlüssel an einen zweiten Netzwerkknoten (2) überträgt. Die später für einen gesicherten, über einen der Layer des OSI-Schichtenmodells erfolgenden Datenaustausch zwischen den beiden Netzwerkknoten (1, 2) zu verwendenden Nutzschlüssel werden kryptographisch gesichert über eine zwischen dem ersten und zweiten Netzwerkknoten (1, 2) bestehende Verbindung übertragen, welche nicht für eine durch diese Netzwerkknoten (1, 2) gemeinsam, nach einem QKD-Verfahren erfolgende Erzeugung quantensicherer Schlüssel ausgebildet ist. Die quantensicheren Nutzschlüssel werden erfindungsgemäß mittels eines Quantencomputers des ersten Netzwerkknotens (1) erzeugt und vor ihrer Übertragung an den zweiten Netzwerkknoten (2) mittels eines, mit dem Quantencomputer in einer Wirkverbindung stehenden, mit diesem gemeinsam einen Quantenschlüsselgenerator (4) ausbildenden klassischen digitalen Computer des ersten Netzwerkknotens (1) hinsichtlich des Bestehens einer vorgegebenen Entropie validiert.

## Beschreibung

Die Erfindung betrifft eine Lösung zur Bereitstellung von Quantenschlüsseln, das heißt von quantensicheren kryptographischen Schlüsseln, in einem Netzwerk. Sie bezieht sich darauf, in einem Netzwerk quantensichere, durch einen Angreifer auch mittels eines Quantencomputers nicht zu berechnende Schlüssel zur Verfügung zu stellen, welche eine zuverlässig hohe Entropie aufweisen, so dass diese im Hinblick auf ihre aufeinanderfolgende Erzeugung als tatsächlich zufällig gelten. Hierbei soll die vorgeschlagene Lösung die Bereitstellung derartiger Schlüssel zur Verwendung für eine gesicherte Datenübertragung zwischen Netzwercknoten des Netzwerks ermöglichen, welche untereinander nicht unmittelbar über eine QKD-fähige Verbindung verfügen, das heißt über eine Verbindung, welche diesen Netzwerkknoten eine gemeinsame Erzeugung bei ihnen gleichzeitig vorliegender quantensicherer Schlüssel nach einem QKD-Verfahren ermöglichen würde.

Soweit quantensichere Schlüssel in bestehenden quantensicheren Netzwerken zum Beispiel durch die Anwendung eines QKD-Verfahrens (QKD = Quantum Key Distribution) oder eines PQC-Verfahrens (PQC = Post Quantum Cryptography) erzeugt und verteilt werden, sind diese Quantenschlüssel nicht validiert. Das heißt, das Vertrauen in die Quantensicherheit dieser Schlüssel beruht auf dem Vertrauen in die sie erzeugenden, im Zusammenhang mit der Fertigung ihrer Bauteile, bei der Auslieferung und/oder bei der Inbetriebnahme auf ihre Zuverlässigkeit überprüften Systeme. Zwar wird dieses Vertrauen üblicherweise durch eine turnusmäßige, in dafür festgelegten Intervallen erfolgende Überprüfung der betreffenden Systeme von Zeit zu Zeit bestätigt beziehungsweise erneuert. Eine Validierung der einzelnen zur Laufzeit der Systeme durch sie erzeugten quantensicheren Schlüssel erfolgt indes nicht.

Jedoch ist die Erzeugung von validierten, das heißt echten prüfbaren Zufallszahlen eigentlich eine wesentliche Basis der Kryptographie. Derartige Zufallszahlen werden für kryptographische Anwendungen, das heißt für die Verschlüsselung von Nachrichten oder Datenspeichern sowie für die Sicherung von Übertragungskanälen verwendet. Verschlüsselt werden hierbei Daten jedweder Art, das heißt zum Beispiel Daten, welche mündliche, in digitale Signale gewandelte Informationen repräsentieren, Daten der schriftlichen Kommunikation, Authentifikationsdaten und Schlüsseldaten selbst, oder aber auch netzwerkseitige Management-, Protokoll- und sonstige Daten.

Entsprechende Daten werden im Zuge finanzieller Transaktionen, der Übermittlung von Informationen zu geistigem Eigentum in der Wirtschaft, zur Übermittlung von Staatsgeheimnissen und vielen anderen Bereichen mit hohen Anforderungen an die Vertraulichkeit der durch sie vermittelten Informationen im Zusammenhang mit ihrer Übertragung über Netzwerke mittels quantensicherer Schlüssel gesichert. Dabei schützt nur die Verwendung von Schlüsseln mit einer sehr hohen, das heißt vorzugsweise maximalen Entropie die Datenübertragung zuverlässig. Bei derartigen Schlüsseln ist es unmöglich, für eine einen Quantenschlüssel repräsentierende Bitfolge ein jeweiliges Bit aufgrund der Kenntnis des oder der in der Bitsequenz vorhergehenden Bits vorauszusagen.

Die Entropie stellt hierbei ein Maß für die Unordnung oder Unbestimmtheit von insbesondere Systemen, Zuständen, Ergebnissen von Experimenten oder - aus der Sicht der Informationstheorie - von Nachrichten dar. Bezogen auf letzteres beschreibt sie auch, welchen Informationsgehalt eine Nachricht aufweist. Übertragen auf das hier betrachtete Gebiet der Kryptographie und das zentrale Element der hierbei verwendeten Schlüssel lässt sich dabei im Grunde sagen, dass ein solcher zur Verschlüsselung von Daten, das heißt der durch diese Daten repräsentierten Nachrichten dienender Schlüssel insoweit nach Möglichkeit keinerlei Informationsgehalt besitzen sollte, als es einerseits nicht möglich sein sollte, innerhalb einer einen solchen Schlüssel ausbildenden Bitsequenz auf den Zustand (Wert 0 oder 1) eines Bits dieser Sequenz aus der Abfolge einzelner anderer Bits innerhalb dieser Bitsequenz zu schließen und als es darüber hinaus bei einem Zufallszahlengenerator nicht möglich sein sollte, auf eine von ihm als nächstes auszugebende Zufallszahl, nämlich eine als Schlüssel zu verwendende Bitsequenz aus der Kenntnis einer oder mehrerer zuvor von demselben Zufallszahlengenerator erzeugter Zufallszahlen zu schließen.

Wie gut diese Anforderungen durch ein System, aber auch durch einen Zufallszahlengenerator oder einen Verschlüsselungsalgorithmus erfüllt werden, lässt sich insbesondere mittels spezieller statistischer Tools und Algorithmen bestimmen, wobei es wiederum auch unterschiedliche Konzepte gibt, das zuvor beschriebene Maß, also die Entropie auszudrücken. Entsprechendes ist jedoch nicht Gegenstand dieser Erfindung und soll daher im Weiteren nicht vertieft werden. Insoweit sei an dieser Stelle lediglich beispielhaft auf Killmann et al., "A proposal for Functionality classes for random number generators", 2011 hingeweisen, abrufbar im Internet unter: https://www.bsi.bund.de/SharedDocs/Downloads/DE/BSI/Zertifizierung/Interpretationen/AIS_31_Functionality_classes_for_random_number_generators_e.pdf;jsessionid=DB2C964E6C5CE943AC 5A7844577B4678.1_cid360?__blob=publicationFile&v=1.

In dem vorgenannten Dokument verweisen die Autoren beispielsweise auf statistische Tools des BSI (Bundesamt für Sicherheit in der Informationstechnik) und des NIST (National Institute of Standards and Technology). Zur Angabe der Entropie durch Zufallszahlengeneratoren erzeugter Zufallszahlen und demgemäß zur Bewertung und Einteilung von Zufallszahlengeneratoren im Hinblick auf die Zufälligkeit von ihnen erzeugter Zufallszahlen schlagen die Autoren in dem Dokument ein System von Klassen vor.

Auch mittels verbreitet im praktischen Einsatz befindlicher klassischer Computer werden gegenwärtig Zufallszahlen erzeugt, welche unmittelbar oder als Basis für kryptographische Schlüssel dienen. Allerdings handelt es sich bei diesen Zufallszahlen im strengen Sinne nur um Pseudo-Zufallszahlen, da ihre Entropie regelmäßig nicht hoch genug ist, um von einer tatsächlichen Zufälligkeit der jeweils erzeugten Zahlen ausgehen zu können. Eine Möglichkeit zur Erzeugung und gleichzeitigen Verteilung quantensicherer, das heißt tatsächlich zufälliger kryptographischer Schlüssel stellen QKD-Verfahren, wie beispielsweise das nach dem sogenannten BB84 Protokoll (1984 durch Bennett & Brassard vorgeschlagen) arbeitende Verfahren, dar. Hierbei erzeugen in einem Netzwerk zwei in einer QKD-Beziehung stehende Netzwerkknoten gemeinsam quantensichere Schlüssel, welche diesen beiden Netzwerkknoten gleichzeitig und zur gemeinsamen Verwendung vorliegen. Jedoch sind entsprechende QKD-fähige Systeme aufwendig und dementsprechend teuer und darüber hinaus im Hinblick auf die für ihr Funktionieren bestehenden Randbedingungen mit einigen Nachteilen behaftet, welche auch ihren Einsatz in der Praxis limitieren.

Eine der vorgenannten Randbedingungen besteht darin, dass die über einen Quantenkanal derartiger Systeme übertragenen quantenmechanischen Zustände nach derzeitigem Stand auf ihrem Weg über die Übertragungsstrecke nicht verstärkt werden können, da dies zu einer Zerstörung der übertragenen Quantenzustände führen würde. Dies hat zur Konsequenz, dass insbesondere in für die Praxis relevanten, typischerweise optischen QKD-Systemen, bei welchen die Quantenzustände optisch vermittelt und über eine Glasfaser übertragen werden, aufgrund der in der Glasfaser auftretenden Dämpfung Quantenkanäle eine maximale Länge von einigen Hundert Kilometern, aber jedenfalls nicht von mehreren Tausend Kilometern aufweisen können. Demgemäß können in optischen Systemen Netzwerkknoten, deren Distanz untereinander größer ist als die technisch realisierbare Länge eines optischen Quantenkanals, Quantenschlüssel nicht nach einem QKD-Verfahren miteinander austauschen.

Zudem ist die Schlüsselerzeugungsrate, also die Zahl von quantensicheren Schlüsseln, die in einer bestimmten Zeit unter Einsatz eines QKD-Verfahrens erzeugt werden können, wegen der sehr niedrigen Energie der übertragenen, optisch vermittelten Quantensignale, vergleichsweise gering. Dem letztgenannten Problem wirkt man dadurch entgegen, dass gemäß bekannt gewordener Lösungen zwischen zwei in einer QKD-Beziehung stehenden Netzwerkknoten eine gewisse Anzahl von nach dem QKD-Verfahren erzeugten Schlüsseln in zeitlichen Intervallen ausgetauscht wird, welche insbesondere dazu dienen, einen außerdem zwischen diesen Netzwerkknoten bestehenden klassischen, das heißt digitalen Übertragungskanal zu sichern, über welchen dann eine größere Zahl quantensicherer Schlüssel übertragen wird, die in einem der Netzwerkknoten beispielsweise mittels eines Quantengenerators QRNG (Quantum Random Number Generator) erzeugt werden.

Ein solcher QRNG gehört zur Gruppe der physikalischen Zufallszahlengeneratoren, welche nach physikalischen, zum Beispiel atmosphärisches Rauschen oder quantenphysikalische Effekte nutzenden Prinzipien arbeiten und tatsächlich zufällige Zahlen, das heißt Zufallszahlen höchster Entropie, erzeugen. Allerdings ist es bei den bisher bekannt gewordenen Zufallszahlengeneratoren dieser Art nicht vorgesehen, die von ihnen erzeugten Zufallszahlen zu validieren. Wie eingangs angegeben, beruht das Vertrauen in die von entsprechenden Generatoren erzeugten Zufallszahlen in die Systeme selbst. Jedoch kann es hierbei nicht als sicher gelten, dass ein entsprechendes Vertrauen bei längerer Laufzeit dieser Systeme tatsächlich stets gerechtfertigt ist.

Aufgabe der Erfindung ist es, eine Lösung zu schaffen, welche die Bereitstellung eine hohe Entropie aufweisender, das heißt tatsächlich zufällig erzeugter quantensicherer Schlüssel (Zufallszahlen) in einem Netzwerk ermöglicht und dabei ein hohes Vertrauen in die tatsächliche Zufälligkeit der erzeugten Quantenschlüssel rechtfertigt. Vorzugsweise sollen die entsprechenden Schlüssel außerdem authentifiziert und damit auch im Hinblick auf ihre gesicherte Herkunft vertrauenswürdig sein. Hierzu sind ein Verfahren anzugeben und ein zu dessen Durchführung geeignetes System bereitzustellen.

Die Aufgabe wird durch ein Verfahren mit den Merkmalen des Patentanspruchs 1 gelöst. Ein die Aufgabe lösendes, zur Durchführung des Verfahrens geeignetes System wird durch den unabhängigen Sachanspruch charakterisiert. Vorteilhafte Aus- und Weiterbildungen der Erfindung sind durch die jeweiligen Unteransprüche gegeben.

Das zur Lösung der Aufgabe vorgeschlagene Verfahren zur Bereitstellung von Quantenschlüsseln in einem Netzwerk geht von einer Konstellation aus, bei welcher ein erster dafür ausgebildeter Netzwerkknoten Quantenschlüssel erzeugt und diese durch Zufallszahlen repräsentierten Quantenschlüssel an einen zweiten Netzwerkknoten des Netzwerks überträgt. Dabei werden die später für einen gesicherten, über einen der Layer des OSI-Schichtenmodells, nämlich insbesondere über einen der Layer 1 bis 3, zwischen den beiden Netzwerkknoten erfolgenden Datenaustausch und damit als Nutzschlüssel zu verwendenden quantensicheren Schlüssel kryptographisch gesichert über eine zwischen dem ersten Netzwerkknoten und dem zweiten Netzwerkknoten bestehende Verbindung übertragen.

Die vorgenannte Verbindung ist dabei aber derart, dass sie nicht für eine durch die beiden Netzwerkknoten gemeinsam, nach einem QKD-Verfahren erfolgende Erzeugung gleichzeitig in beiden Netzwerkknoten vorliegender quantensicherer Schlüssel ausgebildet ist. Das heißt, jedenfalls über die für die Bereitstellung beziehungsweise Übertragung nach dem erfindungsgemäßen Verfahren genutzte Verbindung stehen die beiden Netzwerkknoten untereinander nicht in einer direkten QKD-Beziehung.

Soweit im Kontext der Darstellungen zur Erfindung, so auch vorstehend und in den Patentansprüchen, von einem Nutzschlüssel gesprochen wird, dient die Verwendung dieser Bezeichnung lediglich der begrifflichen Unterscheidung eines nach dem erfindungsgemäßen Verfahren, zur späteren Verwendung für den sicheren Datenaustausch über einen der Layer des OSI-Schichtenmodells bereitgestellten quantensicheren Schlüssels von anderen gegebenenfalls für dessen gesicherte Übertragung, beispielsweise im Wege einer bitweisen XOR-Verknüpfung mit dem Nutzschlüssel, verwendeten quantensicheren Schlüsseln. Zudem sei an dieser Stelle darauf hingewiesen, dass die Begriffe "Quantenschlüssel" und "quantensicher Schlüssel" hier synonym verwendet werden.

Erfindungsgemäß werden die quantensicheren, an den zweiten Netzwerkknoten zu übertragenden Nutzschlüssel in dem ersten Netzwerkknoten mittels eines Quantencomputers erzeugt und als hinsichtlich des Bestehens einer vorgegebenen Entropie validierte Nutzschlüssel an den vorgenannten zweiten Netzwercknoten übertragen. Die Validierung der Nutzschlüssel vor ihrer Übertragung an den zweiten Netzwerkknoten erfolgt erfindungsgemäß mittels eines, mit dem vorgenannten Quantencomputer in einer Wirkverbindung stehenden, mit ihm gemeinsam einen Quantenschlüsselgenerator zur Erzeugung validierter Zufallszahlen ausbildenden klassischen digitalen Computers des ersten Netzwerkknotens.

Ein Quantencomputer, und somit auch der bei dem erfindungsgemäßen Verfahren verwendete Quantencomputer, nutzt zur Erzeugung von Zufallszahlen QBits (Quantum Bits), die, anders als die Bits digital arbeitender klassische Computer, neben den "reinen" Werten 0 und 1 auch eine größere Zahl möglicher Überlagerungen von 0 und 1 annehmen können. Quantenoperationen, oder Quantengatter, erlauben es die QBits kontrolliert zu manipulieren sowie zwei QBits miteinander quantenmechanisch zu verschränken, so dass eine nichtlokale Korrelation derselben entsteht. Mehrere Qbits, die gemeinsam die quantenmechanischen Gatter durchlaufen, werden in diesem Kontext als QBit Register bezeichnet. Die auch für das erfindungsgemäße Verfahren genutzte Besonderheit des Quantencomputers besteht darin, dass bei Überlagerung aller Qbits in einem Quantenregister der Länge n, das Register alle 2ⁿ Werte in seinem Zahlenraum gleichzeitig hält. Die Quantengatter operieren somit gleichzeitig in einer Operation auf dem gesamten Zahlenraum, wodurch ein intrinsischer Parallelismus bei Berechnungen entsteht, der jedem klassischen Computer überlegen ist. Wird nun am Ende des Vorganges das Register gemessen, so wird die quantenmechanische Überlagerung aller Zustände zerstört und es entsteht eine klassische Bitfolge der Länge n, deren Werte rein zufällig sind. Dieser als Sampling bezeichnete Prozess erzeugt die Folgen von Zufallszahlen der Länge n.

Was die zuvor angesprochene vorgegebene Entropie anbelangt, so ist es eine Frage der Implementierung, welches Maß hierfür verwendet und welcher (unterer) Grenzwert/Schwellwert in Bezug auf dieses Maß, also welches Mindestmaß für die Zufälligkeit, in einem jeweiligen System festgelegt wird. Gegebenenfalls kann dabei nicht nur ein einzelner Wert, sondern ein ganzer Parametersatz für das Mindestmaß an Entropie festgelegt werden. Eine Möglichkeit besteht dabei in der Anwendung der schon angesprochenen Klassen nach Killmann et al., wobei beispielsweise definiert sein könnte, dass die von dem Quantencomputer erzeugten, als Schlüssel verwendeten Zufallszahlen den an durch einen Zufallszahlengenerator der Klasse PTG.3 erzeugten Zufallszahlen gestellten Anforderungen zu genügen haben.

Die in der beschriebenen Weise erzeugten und als validierte quantensichere Schlüssel bereitgestellten Zufallszahlen hoher Entropie können unter anderem für die nachfolgend angegebenen Zwecke verwendet werden.
- Die Nutzschlüssel können über einen Schlüsselmanagement-Layer eines "Trusted QKD Netzwerkes" versendet werden, um an den Endpunkten des Netzwerks auch ohne Verfügbarkeit eines Quantenkanals identische Schlüssel bereitstellen zu können. Diese quantensicheren Schlüssel können dann für die Verschlüsselung von Nachrichten auf verschiedenen OSI Layern, z.B. auf Layer 1 (physikalische Ebene), Layer 2 (Data Link Ebene) oder Layer 3 (IP Network Ebene) eingesetzt werden.
- Die Nutzschlüssel können in asymmetrischen "Post Quantum" Verschlüsselungs-, Signatur- oder Authentifizierungsverfahren eingesetzt werden.
- Die Nutzschlüssel können in alternativen symmetrischen oder asymmetrischen Verschlüsselungsverfahren im Kontext digitaler Kommunikationsnetze eingesetzt werden, in denen jeweils die Verwendung von Schlüsseln mit höchstmöglicher Entropie zwingend erforderlich ist.
- Die Nutzschlüssel können in entsprechenden Applikationen und Verfahren im Kontext digitaler Informationstechnologien eingesetzt werden, um Schlüssel und gegebenenfalls anderweitig zu verwendende Zufallszahlen mit höchstmöglicher Entropie bereitstellen zu können.
- Die Nutzschlüssel können im Rahmen von Network Services bereitgestellt werden, um als "Highest Security as a Service" (HSaaS) Zufallszahlen mit höchstmöglicher Entropie an potenzielle Kunden, zum Beispiel in den Bereichen Industrie 4.0, Automotive, für sicherheitskritische und relevante Anwendungen ausgeliefert werden zu können.

Das Verfahren ist vorzugsweise in der Weise gestaltet, dass die in der erfindungsgemäßen Weise in dem ersten Netzwerkknoten erzeugten und validierten Quantenschlüssel durch den ersten Netzwerkknoten zusammen mit einer Signatur ausgesendet werden, durch welche diese Schlüssel als von dem ersten Netzwerkknoten, das heißt von dessen Quantencomputer stammende Schlüssel, eindeutig authentifiziert werden. Die entsprechende Signatur wird dabei durch den klassischen Computer unter Anwendung eines PQC-Signaturverfahrens erzeugt.

Unter Post Quantum Kryptographie (PQC) Verschlüsselung versteht man klassische Verschlüsselungsalgorithmen, die auf komplexeren mathematischen Problemen beruhen als Primfaktorzerlegung oder elliptische Kurven. Ohne es beweisen zu können, glaubt man, dass die Komplexität der neuen Verschlüsselungsverfahren robust gegenüber zukünftigen algorithmischen Fähigkeiten von Quantencomputern sind und sie demensprechend als quantensicher gelten. Jedenfalls konnte insoweit noch kein Gegenbeweis erbracht werden.

Die Post Quantum Authentifizierung nutzt ebenso komplexere mathematische Probleme, um Zertifikate zu erzeugen, die nicht durch Quantencomputer angreifbar sind. Auch lassen sich Nachrichten digital signieren, basierend auf komplexer Mathematik, die somit auch als quantensicher gelten. Die Post Quantum Kryptographie basiert auf asymmetrischer Kryptographie mit öffentlichen und privaten Schlüsseln. Auch hierbei ist die Qualität der Schlüssel umso besser, je besser die Qualität des zu ihrer Erzeugung verwendeten Generators ist.

Entsprechend einer praxisgerechten Umsetzung des Verfahrens wird durch den mit dem Quantencomputer in einer Wirkverbindung stehenden klassischen Computer des ersten Netzwerkknotens eine Reihe von Pseudo-Zufallszahlen gebildet. Diese Zufallszahlen werden in eine Abfolge von Quantengattern, also in einem zufälligen Quantenalgorithmus, übersetzt. Dieser Quantenalgorithmus wird durch den Quantencomputer des ersten Netzwerkknotens ausgeführt und am Ende dieses Vorgangs das Register, das heißt das entstehende Ergebnis, gemessen. Bei dieser Messung wird die quantenmechanische Überlagerung aller Zustände zerstört, so dass eine klassische Bitfolge der Länge n entsteht, die hinsichtlich des Aufeinanderfolgens der in ihr enthaltenen Bits eine rein zufällige Zahl darstellt.

Die im Wege eines solchen Samplings entstehenden Zufallszahlen werden durch den Quantencomputer an den mit ihm in einer Wirkverbindung stehenden klassischen Computer zurückgegeben. Der klassische Computer validiert dann diese Zufallszahlen, indem er deren Entropie mit Hilfe statistischer Methoden bewertet. Stellt der klassische Computer fest, dass die Zufallszahlen mindestens eine vorgegebene Entropie aufweisen, so bestätigt er diese als valide, was er beispielsweise mittels eines Zertifikats kenntlich macht. Die insoweit vorgesehene Zertifizierung kann beispielsweise dadurch erfolgen, dass der klassische Computer die erzeugten quantensicheren Schlüssel (Zufallszahlen) mit einer Signatur - vorzugsweise, wie ebenfalls schon erwähnt, nach einem PQC-Verfahren erzeugt - versieht und hierdurch einerseits kenntlich macht, dass diese Zufallszahlen in dem ersten Netzwerkknoten erzeugt wurden und dass sie darüber hinaus auch validiert wurden, das heißt eine hinreichend hohe Entropie aufweisen, weil der klassische Computer die Schlüssel anderenfalls nicht zertifiziert hätte. Dazu verwendbare PQC-Signierverfahren sind aus dem Stand der Technik bekannt und am Ende dieser Beschreibung der Erfindung beispielhaft genannt.

Im Falle dessen, dass zwischen dem ersten Netzwerkknoten und dem zweiten Netzwerkknoten eine direkte Verbindung besteht, die aber nicht für einen QKD-Schlüsselaustausch ausgebildet ist, werden die von dem Quantenschlüsselgenerator (das heißt von dem Quantencomputer im Zusammenwirken mit dem klassischen Computer) des ersten Netzwerkknotens erzeugten Quantenschlüssel als Nutzschlüssel unter Verwendung eines asymmetrischen Verschlüsselungsverfahrens per Key-Encapsulation an den zweiten Netzwerkknoten übertragen.

Eine andere Ausgestaltung des Verfahrens bezieht sich auf eine Konstellation, bei der die Verbindung zwischen dem ersten Netzwerkknoten und dem zweiten Netzwerkknoten, über mindestens einen Transitknoten besteht, wobei zwar der erste und der zweite Netzwerkknoten untereinander ebenfalls nicht in einer direkten QKD-Beziehungen stehen, aber die auf dem Übertragungsweg zwischen dem ersten Netzwerkknoten und dem zweiten Netzwerkknoten einander benachbarten Netzwerkknoten jeweils durch eine QKD-fähige Verbindung untereinander verbunden sind, Demgemäß stehen sowohl der erste Netzwerkknoten als auch der zweite Netzwerkknoten ebenfalls in einer QKD-Beziehung mit einem (im Sonderfall dessen, dass die Verbindung zwischen ihnen nur über einen Transitknoten besteht, mit demselben) Transitknoten in einer QKD-Beziehung. Im Falle einer Weiterleitung von Quantenschlüsseln (respektive mindestens einen Quantenschlüssels) durch einen solchen auch als Transferknoten oder intermediärer Netzwerkknoten bezeichneten Transitknoten spricht man von Key Forwarding.

Über die, über den oder die Transitknoten bestehende Verbindung wird ein jeweiliger durch den aus dem Quantencomputer und aus dem klassischen Computer bestehenden Quantenschlüsselgenerator des ersten Netzwerkknotens erzeugter validierter Quantenschlüssel an den zweiten Netzwerkknoten als Nutzschlüssel an übertragen, indem
- der Nutzschlüssel an einen jeweiligen Transitknoten übertragen wird in Form einer bitweisen XOR-Verknüpfung des Nutzschlüssels mit einem Quantenschlüssel, der aufgrund der Anwendung eines QKD-Verfahrens als gemeinsamer Schlüssel in dem Transitknoten und in dem ihm in der Übertragungsrichtung für den Nutzschlüssel vorhergehenden Netzwercknoten vorliegt,
- der Nutzschlüssel von einem jeweiligen Transitknoten ausgesendet wird in Form einer bitweisen XOR-Verknüpfung des Nutzschlüssels mit einem Quantenschlüssel, der aufgrund der Anwendung eines QKD-Verfahrens als gemeinsamer Schlüssel in dem Transitknoten und in dem ihm in der Übertragungsrichtung für den Nutzschlüssel folgenden Netzwerkknoten vorliegt.

Ein die Aufgabe lösendes, zur Durchführung des Verfahrens geeignetes Systems wird durch ein Netzwerk gebildet, welches mindestens zwei Netzwerkknoten, nämlich einen ersten Netzwerkknoten und einen zweiten Netzwerkknoten, aufweist. Diese Netzwerkknoten können entweder direkt untereinander verbunden sein oder aber in einem Netzwerk, das mehrere Netzwerkknoten aufweist, auch über einen oder mehrere andere Netzwerkknoten, die als Transitknoten, respektive Transferknoten, fungieren. Ferner weist das Netzwerk einen oder mehrere Quantenschlüsselgeneratoren zur Erzeugung quantensicherer Schlüssel auf.

Erfindungsgemäß handelt es sich bei mindesten einem Quantenschlüsselgenerator des Netzwerks um eine Kombination aus einem Quantencomputer und einem mit diesem in einer Wirkverbindung stehenden klassischen, digitalen Computer. Dabei ist der Quantencomputer dazu ausgebildet, Zufallszahlen hoher Entropie aus durch den klassischen Computer generierten Pseudo-Zufallszahlen zu erzeugen. Der mit ihm in einer Wirkverbindung stehende klassische Computer ist dazu ausgebildet, die von dem Quantencomputer erzeugten Zufallszahlen hinsichtlich des Bestehens einer vorgegebenen Mindestentropie mit Hilfe statistischer Verfahren zu validieren sowie valide Zufallszahlen entsprechend zu kennzeichnen.

Bei einer möglichen Ausbildung des erfindungsgemäßen Systems mit einem ersten Netzwerkknoten und einem mit ihm direkt oder über mindestens einen Transitknoten verbunden zweiten Netzwerkknoten ist die insoweit zwischen dem ersten Netzwerkknoten und dem zweiten Netzwerkknoten bestehende Verbindung nicht für einen Austausch gemeinsam nach einem Verfahren der QKD erzeugter quantensicherer Schlüssel ausgebildet. Hierbei weist der erste Netzwerkknoten einen oder den mindestens einen durch einen Quantencomputer und durch einen mit dem Quantencomputer in einer Wirkverbindung stehenden klassischen Computer gebildeten Quantenschlüsselgenerator auf. Der erste Netzwerkknoten überträgt die von seinem Quantencomputer erzeugten und durch den mit dem Quantencomputer in einer Wirkverbindung stehenden klassischen Computer validierten Quantenschlüssel, kryptographisch gesichert, als Nutzschlüssel an den zweiten Netzwerkknoten des Netzwerks zur späteren Verwendung für einen gesicherten Datenaustausch zwischen dem ersten und dem zweiten Netzwerkknoten über einen Layer des OSI-Schichtenmodells.

Gemäß einer vorteilhaften Weiterbildung des Systems ist der gemeinsam mit dem Quantencomputer einen Quantenschlüsselgenerator des Systems bildende klassische, digitale Computer dazu ausgebildet, die von ihm validierten Quantenschlüssel des Quantencomputers mittels einer nach einem PQC-Signaturverfahren erstellten Signatur zu authentifizieren.

Die Erfindung soll nachfolgend in der Art eines Ausführungsbeispiels anhand von möglichen Anwendungsszenarien nochmals näher erläutert werden. In den zugehörigen Zeichnungen zeigen:
- Fig. 1:: die schematische Darstellung dreier Netzwerkknoten eines Netzwerks mit einem in erfindungsgemäßer Weise ausgebildeten ersten Netzwerkknoten,
- Fig. 2:: die schematische Darstellung einer Konfiguration, bei welcher in einem ersten Netzwerkknoten erzeugte Quantenschlüssel unter Einsatz eines PQC-Verfahrens an einen zweiten Netzwerkknoten übertragen werden.

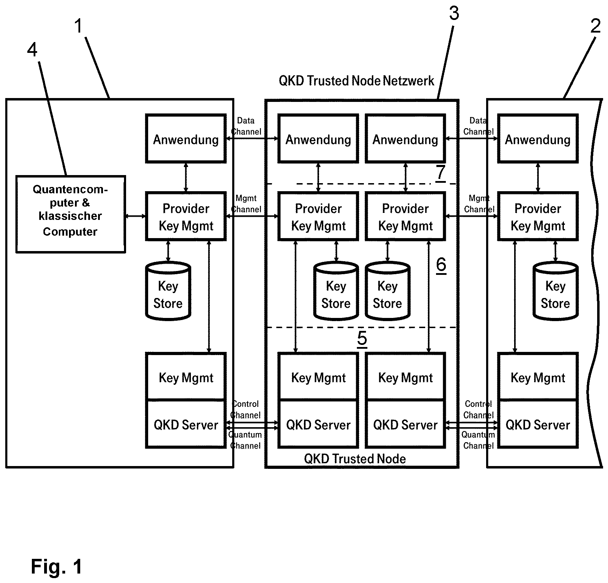

Die Fig. 1 zeigt beispielhaft einen drei Netzwerkknoten 1, 2, 3 umfassenden Teil eines Netzwerks in einer schematischen Darstellung. In dem betreffenden Teil des Netzwerks werden quantensichere Schlüssel durch einen ersten Netzwercknoten 1 unter Anwendung der Erfindung erzeugt und über einen, in der Mitte dargestellten, auch als Transitknoten bezeichneten Netzwerkknoten 3 an einen zweiten, in der Zeichnung rechts dargestellten Netzwerkknoten 2 übertragen.

Die gezeigten Netzwerkknoten 1, 2, 3 lassen sich unter Bezug auf die in ihnen implementierten Komponenten und hinsichtlich des aus organisatorischer Sicht betrachteten Zusammenwirkens dieser Komponenten gedacht jeweils in drei, nur für den Transitknoten 3 kenntlich gemachte (nur aus Darstellungsgründen durch gestrichelte Linien voneinander getrennte) Ebenen 5, 6, 7 unterteilen. Gemäß dieser Betrachtungsweise handelt es sich bei einer ersten Ebene 5 um eine hier als Herstellerebene bezeichnete Ebene, welche im Wesentlichen herstellerspezifische Komponenten eines QKD-Systems, insbesondere bestehend aus einem QKD-Server und einem herstellerspezifischen Schlüsselmanagement (Key Management) mit zugehörigem Schlüsselspeicher, umfasst. Dabei sind diese herstellerspezifischen Komponenten, auch aus Gründen des Vertrauens in die mittels ihrer nach einem QKD-Verfahren erzeugten quantensicheren Schlüssel, selbst für den Betreiber des Netzwerkknotens 3 (gilt entsprechend auch für die Netzwerkknoten 1, 2) in keiner Weise zugänglich. Das heißt, die Komponenten sind durch spezielle Gehäuse und hardwaretechnische Einrichtungen gegen jeglichen zerstörungsfreien Zugriff auf die Komponenten selbst sowie auf die in diesen gehaltenen Daten gesichert.

Gewissermaßen oberhalb der Herstellerebene (Ebene 5) ist die Providerebene, nämlich die Ebene 6 mit spezieller Technik des Betreibers des Netzwerkknotens 3 (gilt entsprechend auch für die Netzwerkknoten 1, 2) als dem Provider, angesiedelt. Diese Ebene 6 umfasst insbesondere ein providerspezifisches, von dem Herstellerschlüsselmanagement unabhängiges Schlüsselmanagement mit einem zugehörigen Schlüsselspeicher. Die auf der Herstellerebene (Ebene 5) im Wege einer gemeinsamen Erzeugung durch den Austausch nach einem QKD-Verfahren generierten quantensicheren Schlüssel werden, veranlasst durch das herstellerspezifische Schlüsselmanagement (Key Management), an die Providerebene (Ebene 6) und an deren Schlüsselmanagement zur Verwaltung in dem Schlüsselspeicher sowie zur späteren Verwendung übergeben.

In der Darstellung oberhalb der Providerebene (Ebene 6) ist die Anwendungsebene (Ebene 7) angesiedelt (gilt entsprechend auch für die Netzwerkknoten 1, 2), welcher Schlüssel aus dem Schlüsselspeicher der Providerebene (Ebene 6) bei Bedarf für einen sicheren Datenaustausch auf der Anwendungsebene (Ebene 7) zur Verfügung gestellt werden. Soll nun ein quantensicherer Schlüssel zur späteren Verwendung für einen gesicherten Datenaustausch zwischen dem ersten Netzwerkknoten 1 und dem zweiten Netzwerkknoten 2 in dem ersten Netzwerkknoten 1 erzeugt und über den Transitknoten 3 an den zweiten Netzwerkknoten 2 übertragen werden, so vollzieht sich hierbei grob in etwa der nachfolgende Ablauf.

Durch einen Quantencomputer des ersten Netzwerkknotens 1 werden fortwährend quantensichere Schlüssel erzeugt und durch einen, mit diesem Quantencomputer in einer Wirkverbindung stehenden und mit ihm gemeinsam einen Quantenschlüsselgenerator 4 ausbildenden klassischen Computer des ersten Netzwerkknotens 1 validiert. Die solchermaßen erzeugten und als validiert kenntlich gemachten quantensicheren Schlüssel werden auf der Providerebene (Ebene 6) des ersten Netzwerkknotens 1 in dessen Schlüsselspeicher abgelegt. Soll nun einer dieser Schlüssel an den zweiten Netzwerkknoten 2, das heißt beispielsweise an einen beliebigen Netzwerkknoten eines Netzwerkes, übertragen werden, so wird er, gesteuert durch das Provider Key Management, das heißt das Schlüsselmanagement der Providerebene (Ebene 6), aus dem Schlüsselspeicher ausgelesen und über einen Managementkanal (Management Channel) an den Transitknoten 3 übermittelt. Zur sicheren Übermittlung erfolgt diese vorzugsweise, indem der ausgewählte quantensichere Nutzschlüssel bitweise XOR-verknüpft wird mit einem aufgrund des Austausches unter Anwendung eines QKD-Verfahrens gemeinsam in dem ersten Netzwerkknoten 1 und in dem Transitknoten 3 vorliegenden Quantenschlüssel.

Innerhalb des Transitknotens 3 wird der Nutzschlüssel nach abermaliger Verknüpfung der durch den ersten Netzwerkknoten 1 ausgesendeten Bitsequenz mit dem gemeinsam in dem ersten Netzwerkknoten 1 und dem Transitknoten 3 vorliegenden Quantenschlüssel an den Ausgangsbereich des Transitknotens 3 übertragen, über welchen dieser, in Verbindung mit dem zweiten, als Ziel für den Nutzschlüssel vorgesehenen Netzwerkknoten 2 steht. Die Übertragung des Nutzschlüssels vom Transitknoten 3 zu dem zweiten Netzwerkknoten 2 erfolgt analog zu der Übertragung zwischen dem ersten Netzwerkknoten 1 und dem Transitknoten 3 im Wege einer XOR-Verknüpfung mit einem in dem Transitknoten 3 und dem zweiten Netzwerkknoten 2 gemeinsam vorliegenden Quantenschlüssel.

Durch nochmalige XOR-Verknüpfung mit dem letztgenannten gemeinsamen Quantenschlüssel wird aus der bei dem zweiten Netzwerkknoten 2 eingehenden Bitsequenz der ursprünglich in dem ersten Netzwerkknoten 1 erzeugte quantensichere Nutzschlüssel extrahiert. Dieser wird zusammen mit einem ebenfalls durch den ersten Netzwerkknoten 1 übertragenen, den betreffenden Nutzschlüssel eindeutig identifizierenden Identifier sowie vorzugsweise mit dem Zertifikat der Entropieklasse in einem Schlüsselspeicher des zweiten Netzwerkknotens 2 abgelegt.

Möchte nun der erste Netzwerkknoten 1 mit dem zweiten Netzwerkknoten 2 Daten sicher unter Verwendung dieses Nutzschlüssels mit der benötigten Entropieklasse austauschen, so übermittelt er auf der Anwendungsebene (Ebene 7) über einen klassischen digitalen Kanal (Data Channel) den Identifier an den zweiten Netzwerkknoten 2, mittels welchem der Quantenschlüssel aus dem Schlüsselspeicher des zweiten Netzwerkknotens 2 wieder ausgelesen und der Anwendungsebene (Ebene 7) zur Verschlüsselung der mit dem ersten Netzwercknoten 1 auszutauschenden Daten zur Verfügung gestellt wird.

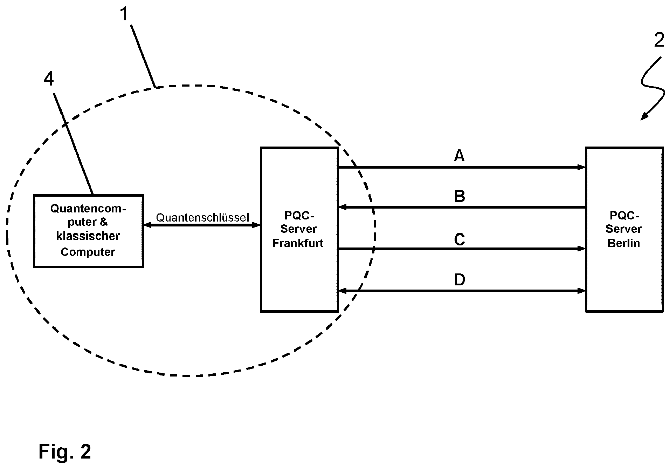

Die Fig. 2 zeigt die schematische Darstellung einer Konfiguration, bei welcher in einem ersten Netzwerkknoten 1 erzeugte Quantenschlüssel unter Einsatz eines PQC-Verfahrens zur Verschlüsselung an einen zweiten, mit ihm direkt verbunden Netzwerkknoten 2 übertragen werden, wobei die zwischen den beiden Netzwercknoten 1, 2 bestehende Verbindung, welche nicht für eine durch diese beiden Netzwerkknoten 1, 2 gemeinsam, nach einem QKD-Verfahren erfolgende Erzeugung gleichzeitig in beiden Netzwerkknoten 1, 2 vorliegender quantensicherer Schlüssel ausgebildet ist, beispielsweise zwei Netzwerkknoten zweier lokaler Netze, wie zum Beispiel - in der Fig. 2 - zweier Metronetze in Frankfurt und Berlin, miteinander verbindet und der erste Netzwerkknoten 1 in einem dieser lokalen Netze und der zweite Netzwerkknoten 2 in dem anderen lokalen Netz als dessen Bestandteil angeordnet ist. Ein wesentlicher Bestandteil jedes der beiden Netzwerkknoten 1, 2 ist ein PQC-Server. Der Netzwerkknoten in Frankfurt (erster Netzwerkknoten 1) verfügt darüber hinaus über einen, gemäß der Erfindung aus einem Quantencomputer und einem mit diesem in einer Wirkverbindung stehenden klassischen Computer gebildeten Quantenschlüsselgenerator 4.

Zwischen den Netzwerkknoten 1, 2 in Frankfurt und in Berlin werden, im Zuge der Bereitstellung eines durch den Quantengenerator 4 des Netzwerkknotens 1 erzeugten Quantenschlüssels einer geforderten Entropieklasse und seiner Nutzung für einen gesicherten (direkten) Datenaustausch zwischen beiden Netzwerkknoten 1, 2, Daten wie folgt ausgetauscht:
A Der PQC-Server in Frankfurt fordert den öffentlichen Schlüssel des anderen Netzwerkknotens 2, das heißt des PQC-Servers in Berlin an zur Verschlüsselung einer durch seinen Quantenschlüsselgenerator 4 (Quantencomputer mit klassischem Computer) erzeugten, validierten und signierten Zufallszahl, welche als geheimer Quantenschlüssel zur Verschlüsselung des Datenaustausches zwischen beiden Netzwerkknoten 1, 2 dienen soll.
B Der PQC-Server des zweiten Netzwerkknotens 2 in Berlin übermittelt seinen öffentlichen PQC-Schlüssel an den diesen anfordernden PQC-Server in Frankfurt.
C Der PQC-Server Frankfurt verschlüsselt die Zufallszahl mit dem öffentlichen PQC-Schlüssel des PQC-Servers in Berlin und übersendet diesen in einer Nachricht via Key Encapsulation an den PQC Server Berlin. Der PQC Server Berlin entschlüsselt die Nachricht mit seinem privaten PQC-Schlüssel und gelangt dadurch in den Besitz der durch den Quantenschlüsselgenerator 4 des Netzwerkknotens 1 zur Verwendung als Quantenschlüssel erzeugten Zufallszahl. Somit teilen beide PQC Server Frankfurt und Berlin eine validierte und signierte Zufallszahl mit der benötigten Entropieklasse als "Shared Secret".
D Das "Shared Secret", also der durch die im gemeinsamen Besitz beider Netzwerkknoten 1, 2 befindliche, durch die Zufallszahl gebildete Quantenschlüssel wird zur quantensicheren Verschlüsselung von Nutzdaten für entsprechende Ende-zu-Ende Datenübertragungen zwischen den Netzwerkknoten 1, 2 oder von Applikationen genutzt.

Zur PQC-Verschlüsselung und für das Signieren von Nachrichten mittels PQC sind bereits mehrere Verfahren bekannt geworden. Da es sich bei diesen PQC-Verfahren um eine noch verhältnismäßig neue Technik handelt, sind allenfalls einige davon schon in gewisser Wiese etabliert. Ungeachtet dessen sollen nachfolgend die vorstehenden Ausführungen vervollständigend, jedoch ohne Anspruch auf Vollständigkeit, insoweit bekannt gewordene Verfahren genannt werden.

### Verfahren zur PQC-Verschlüsselung

'BIKE1-L1-CPA', 'BIKE1-L3-CPA', 'BIKE1-L1-FO', 'BIKE1-L3-FO', 'Kyber512', 'Kyber768', 'Kyber1024', 'Kyber512-90s', 'Kyber768-90s', 'Kyber1024-90s', 'LEDAcryptKEM-LT12', 'LEDAcryptKEM-LT32', 'LEDAcryptKEM-LT52', 'NewHope-512-CCA', 'NewHope-1024-CCA', 'NTRU-HPS-2048-509', 'NTRU-HPS-2048-677', 'NTRU-HPS-4096-821', 'NTRU-HRSS-701', 'LightSaber-KEM', 'Saber-KEM', 'FireSaber-KEM', 'BabyBear', 'BabyBearEphem', 'MamaBear', 'MamaBearEphem', 'PapaBear', 'PapaBearEphem', ,FrodoKEM-640-AES', 'FrodoKEM-640-SHAKE', 'FrodoKEM-976-AES', 'FrodoKEM-976-SHAKE', 'FrodoKEM-1344-AES', 'FrodoKEM-1344-SHAKE', 'SIDH-p434', 'SIDH-p503', 'SIDH-p610', ,SIDH-p751', 'SIDH-p434-compressed', 'SIDH-p503-compressed', 'SIDH-p610-compressed', 'SIDH-p751-compressed', 'SIKE-p434', 'SIKE-p503', 'SIKE-p610', 'SIKE-p751', 'SIKE-p434-compressed', 'SIKE-p503-compressed', 'SIKE-p610-compressed', 'SIKE-p751 -compressed'.

### PQC-Signaturverfahren

'DILITHIUM_2', 'DILITHIUM_3', 'DILITHIUM_4', 'MQDSS-31-48', MQDSS-31-64', SPHINCS+-Haraka-128f-robust', SPHINCS+-Haraka-128f-simple', 'SPHINCS+-Haraka-128s-robust', 'SPHINCS+-Haraka-128s-simple', 'SPHINCS+-Haraka-192f-robust', 'SPHINCS+-Haraka-192f-simple', 'SPHINCS+-Haraka-192s-robust', 'SPHINCS+-Haraka-192s-simple', 'SPHINCS+-Haraka-256f-robust', 'SPHINCS+-Haraka-256f-simple', 'SPHINCS+-Haraka-256s-robust', 'SPHINCS+-Haraka-256s-simple', 'SPHINCS+-SHA256-128f-robust', ,SPHINCS+-SHA256-128f-simple', 'SPHINCS+-SHA256-128s-robust', 'SPHINCS+-SHA256-128s-simple', 'SPHINCS+-SHA256-192f-robust', 'SPHINCS+-SHA256-192f-simple', 'SPHINCS+-SHA256-192s-robust', 'SPHINCS+-SHA256-192s-simple', 'SPHINCS+-SHA256-256f-robust', 'SPHINCS+-SHA256-256f-simple', 'SPHINCS+-SHA256-256s-robust', 'SPHINCS+-SHA256-256s-simple', 'SPHINCS+-SHAKE256-128f-robust', 'SPHINCS+-SHAKE256-128f-simple', 'SPHINCS+-SHAKE256-128s-robust', 'SPHINCS+-SHAKE256-128s-simple', 'SPHINCS+-SHAKE256-192f-robust', 'SPHINCS+-SHAKE256-192f-simple', 'SPHINCS+-SHAKE256-192s-robust', 'SPHINCS+-SHAKE256-192s-simple', 'SPHINCS+-SHAKE256-256f-robust', 'SPHINCS+-SHAKE256-256f-simple', 'SPHINCS+-SHAKE256-256s-robust', 'SPHINCS+-SHAKE256-256s-simple',m 'picnic_L1_FS', 'picnic_L1_UR', 'picnic_L3_FS', 'picnic_L3_UR', 'picnic_L5_FS', 'picnic_L5_UR', 'picnic2_L1_FS', 'picnic2_L3_FS', 'picnic2_L5_FS', 'qTesla-p-I', 'qTesla-p-III'

## Patentansprüche

1. Verfahren zur Bereitstellung von Quantenschlüsseln, nämlich von quantensicheren kryptographischen Schlüsseln, in einem Netzwerk, gemäß welchem ein erster dafür ausgebildeter Netzwerkknoten (1) Quantenschlüssel erzeugt und diese Quantenschlüssel als Nutzschlüssel an einen zweiten Netzwerkknoten (2) überträgt, wobei die später für einen gesicherten, über einen der Layer des OSI-Schichtenmodells erfolgenden Datenaustausch zwischen den beiden Netzwerkknoten (1, 2) zu verwendenden Nutzschlüssel kryptographisch gesichert über eine zwischen dem ersten Netzwerkknoten (1) und dem zweiten Netzwercknoten (2) bestehende Verbindung übertragen werden, welche nicht für eine durch diese Netzwerkknoten (1, 2) gemeinsam, nach einem QKD-Verfahren erfolgende Erzeugung gleichzeitig in beiden Netzwerkknoten vorliegender quantensicherer Schlüssel ausgebildet ist, **dadurch gekennzeichnet, dass** die quantensicheren Nutzschlüssel in dem ersten Netzwerkknoten (1) mittels eines Quantencomputers erzeugt und als hinsichtlich des Bestehens einer vorgegebenen Entropie validierte Nutzschlüssel an den zweiten Netzwerkknoten (2) übertragen werden, wobei die Validierung der Nutzschlüssel vor ihrer Übertragung an den zweiten Netzwerkknoten (2) mittels eines, mit dem Quantencomputer in einer Wirkverbindung stehenden, mit diesem gemeinsam einen Quantenschlüsselgenerator (4) zur Erzeugung validierter Quantenschlüssel ausbildenden klassischen digitalen Computers des ersten Netzwerkknotens (1) erfolgt.

2. Verfahren nach Anspruch 1, **dadurch gekennzeichnet, dass** die durch den klassischen Computer validierten Quantenschlüssel zur Authentifizierung ihres Ursprungs von dem ersten Netzwerkknoten (1) zusammen mit einer durch den klassischen Computer nach einem PQC-Signaturverfahren erstellten Signatur ausgesendet werden.

3. Verfahren nach Anspruch 1 oder 2, **dadurch gekennzeichnet, dass** zur Erzeugung der bereitzustellenden Quantenschlüssel durch den klassischen Computer des ersten Netzwerkknotens (1) Pseudo-Zufallszahlen generiert und diese an den mit ihm in einer Wirkverbindung stehenden Quantencomputer übergeben und in eine Abfolge von Quantengattern, das heißt in einen durch den Quantencomputer ausgeführten Quantenalgorithmus übersetzt werden und dass das im Ergebnis der Ausführung dieses Quantenalgorithmus entstehende Register unter Zerstörung der quantenmechanischen Überlagerungszustände durch den Quantencomputer gemessen und die infolge dessen entstehenden Bitsequenzen durch den Quantencomputer als Zufallszahlen an den sie anschließend zur Verwendung als Quantenschlüssel validierenden klassischen Computer zurückgegeben werden.

4. Verfahren nach einem der Ansprüche 1 bis 3, wobei zwischen dem ersten Netzwerkknoten (1) und dem zweiten Netzwerkknoten (2) eine direkte, aber dennoch nicht für einen QKD-Schlüsselaustausch ausgebildete Verbindung besteht, **dadurch gekennzeichnet, dass** von dem aus dem Quantencomputer und aus dem klassischen Computer bestehenden Quantenschlüsselgenerator (4) des ersten Netzwerkknotens (1) erzeugte Quantenschlüssel als Nutzschlüssel unter Verwendung eines asymmetrischen Verschlüsselungsverfahren per Key-Encapsulation an den zweiten Netzwerkknoten (2) übertragen werden.

5. Verfahren nach einem der Ansprüche 1 bis 3, wobei die Verbindung zwischen dem ersten Netzwerkknoten (1) und dem zweiten Netzwerkknoten (2), über welche durch den aus dem Quantencomputer und aus dem klassischen Computer bestehenden Quantenschlüsselgenerator (4) des ersten Netzwerkknotens erzeugte Quantenschlüssel als Nutzschlüssel übertragen werden, über mindestens einen Transitknoten (3) besteht und wobei die auf dem Übertragungsweg zwischen dem ersten Netzwerkknoten (1) und dem zweiten Netzwerkknoten (2) einander benachbarten Netzwerkknoten jeweils durch eine QKD-fähige Verbindung untereinander verbunden sind, **dadurch gekennzeichnet, dass** ein jeweiliger von dem ersten Netzwerkknoten (1) ausgesendeter Nutzschlüssel an den zu seinem Empfang bestimmten zweiten Netzwerkknoten (2) übertragen wird, indem
- der Nutzschlüssel an einen jeweiligen Transitknoten (3) übertragen wird in Form einer bitweisen XOR-Verknüpfung des Nutzschlüssels mit einem Quantenschlüssel, der aufgrund der Anwendung eines QKD-Verfahrens als gemeinsamer Schlüssel in dem Transitknoten (3) und in dem ihm in der Übertragungsrichtung für den Nutzschlüssel vorhergehenden Netzwerkknoten vorliegt,
- der Nutzschlüssel von einem jeweiligen Transitknoten (3) ausgesendet wird in Form einer bitweisen XOR-Verknüpfung des Nutzschlüssels mit einem Quantenschlüssel, der aufgrund der Anwendung eines QKD-Verfahrens als gemeinsamer Schlüssel in dem Transitknoten (3) und in dem ihm in der Übertragungsrichtung für den Nutzschlüssel folgenden Netzwerkknoten vorliegt.

6. System zur Bereitstellung von Quantenschlüsseln in einem Netzwerk, mit mindestens zwei Netzwerkknoten (1, 2, 3), nämlich mit einem ersten Netzwerkknoten (1) und einem zweiten Netzwerkknoten (2), welche miteinander direkt oder über mindestens einen weiteren, als Transitknoten fungierenden Netzwercknoten (3) zu dem Netzwerk verbunden sind, und mit mindestens einem Quantenschlüsselgenerator zur Erzeugung quantensicherer Schlüssel, **dadurch gekennzeichnet, dass** das Netzwerk mindestens einen Quantenschlüsselgenerator (4) aufweist, der durch einen Quantencomputer und einen mit diesem in einer Wirkverbindung stehenden klassischen, digitalen Computer eines Netzwerkknotens (1, 2) gebildet ist, wobei
- der klassische Computer zur Erzeugung von Pseudo-Zufallszahlen ausgebildet ist,
- der Quantencomputer dazu ausgebildet ist, die in eine Abfolge von Quantengattern, das heißt in einen durch den Quantencomputer ausgeführten Quantenalgorithmus übersetzten Pseudo-Zufallszahlen durch Ausführung des Quantenalgorithmus und Messung des dabei entstehenden Ergebnisses in Zufallszahlen zu wandeln sowie diese Zufallszahlen hoher Entropie an den mit ihm in einer Wirkverbindung stehenden klassischen Computer zurückzugeben,
- der klassische Computer dazu ausgebildet ist, die durch den mit ihm in einer Wirkverbindung stehenden Quantencomputer erzeugten, als Quantenschlüssel dienenden Zufallszahlen mittels einer durch ihn ausgeführten Programmanwendung zu validieren und diese, sofern sie wenigstens eine für das System festgelegte Mindestentropie aufweisen, als valide zu kennzeichnen.

7. System nach Anspruch 6, bei dem ein erster Netzwerkknoten (1) und ein zweiter Netzwerkknoten (2) direkt oder über mindestens einen Transitknoten (3) miteinander verbunden sind, wobei die zwischen dem ersten Netzwercknoten (1) und dem zweiten Netzwerkknoten (2) bestehende Verbindung nicht für eine durch den ersten Netzwerkknoten (1) und durch den zweiten Netzwercknoten (2) gemeinsam, nach einem QKD-Verfahren erfolgende Erzeugung gleichzeitig in beiden Netzwerkknoten (1, 2) vorliegender quantensicherer Schlüssel ausgebildet ist, **dadurch gekennzeichnet, dass** der erste Netzwerkknoten (1) den mindestens einen durch einen Quantencomputer und durch einen mit dem Quantencomputer in einer Wirkverbindung stehenden klassischen Computer gebildeten Quantenschlüsselgenerator (4) aufweist und dieser erste Netzwercknoten (1) die von seinem Quantencomputer erzeugten und durch den mit dem Quantencomputer in einer Wirkverbindung stehenden klassischen Computer validierten Zufallszahlen, kryptographisch gesichert, als quantensichere Nutzschlüssel an den zweiten Netzwerkknoten (2) des Netzwerks zur späteren Verwendung für einen gesicherten Datenaustausch zwischen dem ersten und dem zweiten Netzwerkknoten (1, 2) überträgt.

8. System nach Anspruch 6 oder 7, **dadurch gekennzeichnet, dass** der gemeinsam mit dem Quantencomputer einen Quantenschlüsselgenerator (4) des Systems bildende klassische, digitale Computer dazu ausgebildet ist, die von ihm validierten Quantenschlüssel des Quantencomputers mittels einer nach einem PQC-Signaturverfahren erstellten Signatur zu authentifizieren.
